# EUROPEAN PATENT APPLICATION

(11) **EP 4 711 520 A1**
(43) Date of publication of application: **18.03.2026**
(21) Application number: 25167216.8
(22) Date of filing: 28.03.2025
(51) Int. Cl.: D06N 7/00

(54) **POLYOLEFIN RECYCLABLE ARTIFICIAL TURF AND ITS USE IN STATUES**

(30) Priority: 12.09.2024 CN 202411278639
(71) Applicant: Cocreation Grass Co., Ltd, Huaian, Jiangsu 223200 (CN)
(72) Inventor: WU, Yijia, Huaian, Jiangsu 223200 (CN); HU, Xilong, Huaian, Jiangsu 223200 (CN); ZHAO, Chungui, Huaian, Jiangsu 223200 (CN)
(74) Representative: Buzzi, Notaro & Antonielli d'Oulx S.p.A.

(57) **Abstract**

Disclosed are a polyolefin recyclable artificial turf and its use in statues, wherein the recyclable artificial turf includes artificial grass filaments, a primary backing layer and a secondary backing layer sequentially from top to bottom; materials used for the artificial grass filaments, the primary backing layer and the secondary backing layer are all polyolefin; the primary backing layer is tufted with the artificial grass filaments, and root of the artificial grass filaments penetrates through the bottom of the primary backing layer and forms root grass filaments; the polyolefin used for the artificial grass filaments has a melting point of lower than 120°C; the artificial turf designed by the present application can be recyclable and reduce the cost of processing and manufacturing, and the artificial turf can be reused as a filling material for statues, improving the utilization rate of the product.

## Description

### TECHNICAL FIELD

The present application relates to the technical field of artificial turf, and more specifically, relates to a polyolefin recyclable artificial turf and its use in statues.

### BACKGROUND

In recent years, artificial turf has some new applications in the field of lawn statues. According to the customer feedback from foreign malls and supermarkets, using artificial turf of animal shapes as decoration for scenic spots and parks has received positive feedback, which has the advantages of good weather resistance and serving as part of greening. However, the currently used products in the turf are carboxylated styrene butadiene latex, PU latex, and TPE adhesive, etc. The above backing materials are too thick and too hard, there is great difficulty in sewing and manufacture, and the manufacturing cost of the finished product is often much higher than that of the turf material. Although some turf manufacturers reduce the latex amount of backing and foam the latex for the backing, the amelioration in manufacturing costs is not significant.

At the same time, the European Union has passed a related bill known as the "Vast Carbon Market Reform in History", which refers to a circular economy action plan. The Circular Economy Action Plan, a sister policy to the carbon tariff, sets a green threshold for products to enter the European market, and the core of this action plan is sustainability. It is expected that by the end of 2024, the European Union will make a network of rules covering all products and the entire life cycle of the product, from the beginning of the design to the production to the use phase and finally to waste disposal. At the end of the life cycle, waste generation should be reduced, and the waste should be easy to recycle and sort.

Therefore, it is an urgent technical problem to be solved in the art that how to provide an artificial turf that can be recycled and reduce the costs of processing and manufacturing to meet the rules and requirements of the future market.

### SUMMARY

In view of the above, the present application provides a polyolefin recyclable artificial turf with simple manufacture process and low cost, and its use in statues.

In order to achieve the above purpose, the present application provides a polyolefin recyclable artificial turf, which includes artificial grass filaments, a primary backing layer and a secondary backing layer sequentially from top to bottom;
wherein materials used for the artificial grass filaments, the primary backing layer and the secondary backing layer are all polyolefin; and
the polyolefin of the artificial grass filaments has a melting point of lower than 120°C.

Preferably, the primary backing layer is tufted with the artificial grass filaments, and root of the artificial grass filaments penetrates through the bottom of the primary backing layer and forms root grass filaments;
the primary backing layer, the root grass filaments and the secondary backing layer are bonded by a hot-melt adhesive material;
or the primary backing layer and the secondary backing layer are directly thermally bonded by the root grass filaments.

More preferably, the primary backing layer and the secondary backing layer are directly thermally bonded by the root grass filaments.

Preferably, the polyolefin used for the artificial grass filaments has a melting temperature of 110-116°C.

Preferably, the polyolefin used for the secondary backing layer has a melting temperature of 160-166°C.

The beneficial effects of adopting the above technical solutions include at least: the processing temperature of the hot-melt composite roller is set at 140-145°C to ensure the dimensional stability of the secondary backing layer; if polyolefin of the artificial grass filaments has a melting point higher than 120°C, under the premise of the lower thermal composite temperature, the root of the grass filaments cannot be sufficiently melted, and the inner grass filaments of the grass cluster cannot be easily melted due to being far away from the hot-melt roller, resulting in a decrease in the turf withdrawal force; and if the temperature is lower than 100°C, the hardness and heat resistance performance of the grass filaments will decrease, affecting the overall appearance of the lawn.

Preferably, the primary backing layer is a polypropylene woven cloth, or a polyethylene woven cloth, or a combination of both, and the primary backing layer has a mass per unit area of 50-150 g/m².

Preferably, the primary backing layer is a polypropylene woven cloth, and the primary backing layer has a mass per unit area of 55-135 g/m²;
preferably, the primary backing layer has a mass per unit area of 80-105 g/m².

The beneficial effects of adopting the above technical solutions include at least: in a case where the mass per unit area is lower than 55 g/m², the strength of the primary backing layer will be poor, and the production efficiency will be reduced, and in a case where the mass per unit area is higher than 135 g/m², the primary backing layer of the turf is too thick, and the processing efficiency of statues will be reduced.

Preferably, the secondary backing layer is selected from any one or a combination of a polypropylene mesh, a polypropylene long fiber nonwoven layer and a polypropylene short fiber nonwoven layer; the secondary backing layer has a mass per unit area of 10-60 g/m².

Preferably, the secondary backing layer has a mass per unit area of 12-55 g/m².

Preferably, the secondary backing layer has a mass per unit area of 15-50 g/m².

The beneficial effects of adopting the above technical solutions include at least: in a case where the mass per unit area is lower than 10 g/m², the bottom cloth cannot be laid evenly on the surface, which is not conducive to the stability control of production; in a case where the mass per unit area of the bottom cloth is higher than 55 g/m², the cost of the bottom cloth will be too high, and the process efficiency of thermal compounding will be reduced. Based on the comprehensive comparison, the preferred mass per unit area of the secondary backing layer is 15-50 g/m².

Preferably, the hot-melt adhesive material is any one or a combination of a hot-melt adhesive film, a hot-melt adhesive web film, a hot-melt adhesive mesh film and a hot-melt grille adhesive film.

Preferably, the hot-melt adhesive material includes any one or a combination of random polyethylene resin, polyethylene vinyl acetate resin and ethylene acrylic acid resin.

The beneficial effects of adopting the above technical solutions include at least: the random polyethylene resin, polyethylene vinyl acetate resin and ethylene acrylic acid resin material are vinyl-based resin, have strong bonding performance with the non-polar polyolefin material, and provide high adhesion force to the combination of backing cloths in the product.

Another object of the present application is to provide use of the aforementioned polyolefin recyclable artificial turf in statues.

Preferably, the polyolefin recyclable artificial turf is cut into pieces and seamed in the shape of statues, and then filled with a filling material to give the statues.

The recyclable artificial turf of the present application is suitable for lawn statues of various shapes. The backing cloth is thin and easy to process. A good withdrawal force is guaranteed. The recyclable artificial turf is suitable for, but not limited to, the preparation of bear statues, rabbit statues, puppy statues, and lion statues, etc.

The filling material is any one of polypropylene short fibers, recycled polypropylene short fibers, polyester fibers, and recycled polyester fibers.

Through the above technical solution, it can be seen that compared with the prior art, the present application has the following beneficial effects: the polyolefin recyclable artificial turf of the present application adopts the polyolefin material; the glue-free turf can meet the requirements of the subsequent recycling process of the material, and at the same time, the artificial turf provided by the present application is light and thin and easy to process, has reduced labor cost, and is conducive to the market promotion of the product. In the wet environment during outdoor use, the turf withdrawal force is stable without downtrend, and the routine problem of peeling and adhesive stripping after the backing is soaked in water is also solved.

### DETAILED DESCRIPTION

The technical solutions in the embodiments of the present application will be described clearly and completely. Apparently, the embodiments described are part, not all, of the embodiments of the present application. Based on the embodiments of the present application, all other embodiments obtained by those skilled in the art without creative work are within the protective scope of the present application.

### Example 1

This example provides a polyolefin recyclable turf, which includes artificial grass filaments, a primary backing layer and a secondary backing layer;
the primary backing layer was tufted with the artificial grass filaments, and the root of the artificial grass filaments penetrated through the bottom of the primary backing layer and formed root grass filaments; the hot-melt composite process was used to bond the primary backing layer, the root grass filaments and the secondary backing layer by a hot-melt adhesive web film (with a density of 30 g/m²), and the temperature of the hot-melt composite process was 142°C;
the polyolefin material used in the artificial grass filaments had a melting temperature of 116°C;
the primary backing layer was a polypropylene woven cloth, and the mass per unit area of the polypropylene woven cloth was 80 g/m²;
the hot-melt adhesive web film was made of random polyethylene resin; and
the secondary backing layer was a polypropylene mesh, and the mass per unit area of the polypropylene mesh was 10 g/m².

### Example 2

This example provides a polyolefin recyclable turf, which differs from Example 1 in that:
the secondary backing layer was a polypropylene long fiber nonwoven cloth, and the mass per unit area of the polypropylene long fiber nonwoven cloth was 15-50 g/m².

### Example 3

This example provides a polyolefin recyclable turf, which differs from Example 1 in that:
the primary backing layer was a polyethylene woven cloth, and the mass per unit area of the polyethylene woven cloth was 105 g/m²;
the hot-melt adhesive web film was made of polyethylene vinyl acetate resin; and
the secondary backing layer was a polypropylene long fiber nonwoven cloth, and the mass per unit area of the polypropylene long fiber nonwoven cloth was 50 g/m².

### Example 4

This example provides a polyolefin recyclable turf, which differs from Example 2 in that:
the primary backing layer and the secondary backing layer were hot-melt bonded with the root grass filaments by the hot-melt composite process;
the primary backing layer was a combination of a polypropylene woven cloth and a polyethylene woven cloth, and the mass per unit area of the combination of the polypropylene woven cloth and the polyethylene woven cloth was 140 g/m²; and
the secondary backing layer was a polypropylene long fiber nonwoven cloth, and the mass per unit area of the polypropylene long fiber nonwoven cloth was 30 g/m².

### Example 5

This example provides a polyolefin recyclable turf, which differs from Example 1 in that:
the polyolefin material used in the artificial grass filaments had a melting temperature of 110°C;
the primary backing layer was a polypropylene woven cloth, and the mass per unit area of the polypropylene woven cloth was 105 g/m²;
the hot-melt adhesive web film was made of a mixture of random polyethylene and polyethylene vinyl acetate resins; and
the secondary backing layer was a combined bottom cloth of a polypropylene mesh and a polypropylene long fiber nonwoven cloth, and the mass per unit area of the combination of the polypropylene mesh and the polypropylene long fiber nonwoven cloth was 60 g/m².

### Comparative Example 1

Comparative Example 1 was an artificial turf with backing of foamed carboxylated styrene butadiene rubber. The primary backing layer was tufted with the artificial grass filaments, and the root penetrated through the bottom of the primary backing layer, and the foamed carboxylated styrene butadiene latex was coated on the root of the artificial grass filaments. The dry amount of the foamed carboxylated styrene butadiene latex was 400 g/m². The dry amount of the foamed carboxylated styrene butadiene latex in Comparative Example 1 was currently the lowest amount achievable in the process.

### Comparative Example 2

Comparative Example 2 was a foamed polyurethane latex-backing artificial turf. The primary backing layer was tufted with the artificial grass filaments, and the root penetrated through the bottom of the primary backing layer, and the foamed polyurethane latex was coated on the root of the artificial grass filaments. The dry amount of the foamed polyurethane latex was 450 g/m². The dry amount of the foamed polyurethane latex in Comparative Example 2 was currently the lowest amount achievable in the process.

### Comparative Example 3

Comparative Example 3 was a TPE-backing artificial turf. The primary backing layer was tufted with the artificial grass filaments, and the root penetrated through the bottom of the primary backing layer and forms root grass filaments. The TPE film was laminated at the backing; after roller-pressing, the TPE film was laminated with the base cloth, and the root grass filaments were located between the TPE film and the base cloth.

### Comparative Example 4

Comparative Example 4 provides a polyolefin recyclable turf, which differs from Example 5 in that:
the polyolefin raw material used in the artificial grass filaments had a melting point of 124°C.

### Evaluation of recyclability-mechanical properties of recycled particles

Process for recycling granulation:
mechanical recycling method was used: 1) the finished artificial turf was subjected to overall crushing in crushing equipment, and crushed into irregular small pieces of 1-5 cm;
2) as the second step, the small pieces were subjected to washing and drying for later use; and
3) finally, the turf fragments after washing and drying were subjected to granulation by using dual-unit shrinking granulation equipment with a granulation temperature of 150-170 °C, and then to stretching and cutting; recycled particles were produced.

Evaluation of mechanical properties of recycled particles

Tensile strength: the standard sample strip molded by injection molding was tested according to the standard ISO527 with a tensile rate of 5 mm/min.

Flexural strength: the standard sample strip molded by injection molding was tested according to the standard ISO 178 with a bending rate of 2 mm/min.

Izod impact strength: the standard sample strip molded by injection molding was tested according to the standard ISO180 of 8 mm × 4 mm at 23°C.

Data of mechanical properties of recycled particles in Examples 1-4 and Comparative Examples 1-3 are shown in Table 1.

**Table 1**

| | Tensile strength | Flexural strength | Izods impact strength kJ/m² |
|---|---|---|---|
| Comparative Example 1 | 5.3 | 8.2 | 6.2 |
| Comparative Example 2 | 6.5 | 6.5 | 7.2 |
| Comparative Example 3 | 5.2 | 7.0 | 6.8 |
| Example 1 | 12.5 | 23.2 | 21.5 |
| Example 2 | 11 | 20.8 | 23.8 |
| Example 3 | 10.0 | 21.3 | 26.5 |
| Example 4 | 12.5 | 21.1 | 25.8 |

As can be seen from Table 1, the turfs described in Examples 1-4 are polyolefin products and belong to the thermoplastic material. The granulated material obtained from product recycling can, compared with that of Comparative Examples 1-3, maintain high mechanical properties, and can suit the aims of product recyclability in Europe.

### Evaluation of preparation cost of statues

The artificial turfs provided in Examples 1-4 and Comparative Examples 1-3 were used to prepare statues.

The preparation of statues mainly includes four steps: the first step: cutting into small pieces with a punch press according to patterns; the second step: statue sewing process; the third step: statue infilling process; and the fourth step: statue closing up process. The cost is evaluated according to the time required in the total process, and the results are shown in Table 2.

**Table 2**

| | Time of the sewing process | Time of the infilling process | Time of the manual process | Total time of the process |
|---|---|---|---|---|
| Comparative Example 1 | 75 | 12 | 15 | 102 |
| Comparative Example 2 | 78 | 12 | 15 | 105 |
| Comparative Example 3 | 65 | 12 | 12 | 89 |
| Example 1 | 45 | 9 | 8 | 62 |
| Example 2 | 48 | 9 | 8 | 65 |
| Example 3 | 46 | 9 | 7 | 62 |
| Example 4 | 52 | 8 | 6 | 66 |

| | | | | |
|---|---|---|---|---|
| Note: comparison based on bear statue of 35 cm high | | | | |

As can be seen from Table 2, the total process of turf designed in Examples 1-4 is 60% of that of Comparative Examples 1-3, which greatly reduces the preparation man-hours and is conducive to reducing the total cost of the product.

**Withdrawal force test standard:** the artificial turfs provided in Example 5 and Comparative Example 4 were tested according to the method in the standard ISO4919, and the results are shown in Table 3.

**Table 3**

| | Withdrawal force of whole tuft /N | Withdrawal force of single filament / N |
|---|---|---|
| Comparative Example 4 | 35 | 6 |
| Example 5 | 40 | 10 |

Each embodiment in this specification is described in a progressive manner, and each embodiment focuses on the differences from other embodiments, and the same or similar parts among embodiments can refer to each other. For the device disclosed by the embodiments, because the device corresponds to the method disclosed by the embodiments, the description is relatively simple, and see instructions in the method part for the relevant points.

The foregoing description of the disclosed embodiments enables those skilled in the art to realize or use the present application. Various modifications to these embodiments will be obvious to those skilled in the art, and the general principles defined herein may be realized in other embodiments without departing from the spirit or scope of the present application. Therefore, the present application will not be limited to these embodiments shown herein, but will conform to the widest range consistent with the principles and novel features disclosed herein.

## Claims

1. A polyolefin recyclable artificial turf, which comprises artificial grass filaments, a primary backing layer and a secondary backing layer sequentially from top to bottom;
wherein materials used for the artificial grass filaments, the primary backing layer and the secondary backing layer are all polyolefin; and
the polyolefin of the artificial grass filaments has a melting point of lower than 120°C.

2. The polyolefin recyclable artificial turf according to claim 1, wherein the primary backing layer is tufted with the artificial grass filaments, and root of the artificial grass filaments penetrates through the bottom of the primary backing layer and forms root grass filaments;
the primary backing layer, the root grass filaments and the secondary backing layer are bonded by a hot-melt adhesive material;
or the primary backing layer and the secondary backing layer are directly thermally bonded by the root grass filaments.

3. The polyolefin recyclable artificial turf according to claim 2, wherein the polyolefin used for the artificial grass filaments has a melting temperature of 110-116°C.

4. The polyolefin recyclable artificial turf according to claim 2, wherein the polyolefin used for the secondary backing layer has a melting temperature of 160-166°C.

5. The polyolefin recyclable artificial turf according to claim 2, wherein the primary backing layer is a polypropylene woven cloth, or a polyethylene woven cloth, or a combination of both, and the primary backing layer has a mass per unit area of 50-150 g/m².

6. The polyolefin recyclable artificial turf according to claim 5, wherein the primary backing layer is a polypropylene woven cloth, and the primary backing layer has a mass per unit area of 55-135 g/m².

7. The polyolefin recyclable artificial turf according to claim 6, wherein the primary backing layer has a mass per unit area of 80-105 g/m².

8. The polyolefin recyclable artificial turf according to claim 4, wherein the secondary backing layer is selected from any one or a combination of a polypropylene mesh, a polypropylene long fiber nonwoven layer and a polypropylene short fiber nonwoven layer; the secondary backing layer has a mass per unit area of 10-60 g/m².

9. The polyolefin recyclable artificial turf according to claim 8, wherein the secondary backing layer has a mass per unit area of 12-55 g/m².

10. The polyolefin recyclable artificial turf according to claim 9, wherein the secondary backing layer has a mass per unit area of 15-50 g/m².

11. The polyolefin recyclable artificial turf according to claim 2, wherein the hot-melt adhesive material is any one or a combination of a hot-melt adhesive film, a hot-melt adhesive web film, a hot-melt adhesive mesh film and a hot-melt grille adhesive film.

12. The polyolefin recyclable artificial turf according to claim 2, wherein the hot-melt adhesive material comprises any one or a combination of random polyethylene resin, polyethylene vinyl acetate resin and ethylene acrylic acid resin.

13. Polyolefin recyclable artificial turf according to any one of claims 1-12 for use in the manufacture of statues.

14. Polyolefin recyclable artificial turf for use according to claim 13, wherein the polyolefin recyclable artificial turf is cut into pieces and seamed in the shape of statues, and then filled with a filling material to give the statues.
